# EUROPEAN PATENT APPLICATION

(11) **EP 4 268 984 A1**
(43) Date of publication of application: **01.11.2023**
(21) Application number: 22882518.8
(22) Date of filing: 15.09.2022
(51) Int. Cl.: B08B 1/04, B08B 5/04

(54) **DUST REMOVAL DEVICE AND BATTERY MANUFACTURING APPARATUS**

(30) Priority: 21.10.2021 CN 202122547125 U
(71) Applicant: Jiangsu Contemporary Amperex Technology Limited, Liyang City, Jiangsu 213300 (CN)
(72) Inventor: CAO, Xiaoyan, hangzhou, Jiangsu 213300 (CN); YANG, Yi, hangzhou, Jiangsu 213300 (CN)
(74) Representative: Rowlands, Stuart Michael
(86) International application number: PCT/CN2022/119155
(87) International publication number: WO 2023/065907

(57) **Abstract**

The present application discloses a dust removal device and a battery manufacturing apparatus, comprising: a dust removal cover, provided with an accommodating cavity, an opening, and a negative pressure dust suction port, the opening being provided with a dustproof curtain in the circumferential direction; and a roller brush, provided in the accommodating cavity and provided close to the opening, the roller brush being rotatably connected to the dust removal cover. In a dust removal state, the opening faces a surface to be subjected to dust removal, the roller brush is in contact with said surface, one end of the dustproof curtain abuts against said surface, and a gap between the opening and said surface is blocked by the dust-proof curtain so that the accommodating cavity forms a negative pressure cavity. In the technical solution of embodiments of the present application, a negative pressure between the dust removal device and a battery module can be increased, thereby improving the dust removal effect.

## Description

### CROSS-REFERENCES TO RELATED APPLICATIONS

The present application claims priority to Chinese Patent Application 202122547125.4, filed on October 21, 2021 and entitled "DUST REMOVAL DEVICE AND BATTERY MANUFACTURING APPARATUS", the entire content of which is incorporated herein by reference.

### TECHNICAL FIELD

The present application relates to the field of battery manufacturing device, and in particular, to a dust removal device and a battery manufacturing apparatus.

### BACKGROUND

During a welding process of a battery module, a lot of dust is produced, and it is necessary to clean away the dust after the welding process is completed.

At present, an existing dust removal device cannot effectively clean the dust, and a dust removal effect is poor, resulting in dust remaining on a surface of the battery module, and residual dust entering an interior of the battery module to cause battery failure. Therefore, there is a need for a dust removal device with a better cleaning effect.

### SUMMARY

A first aspect of the present application provides a dust removal device, including a dust removal cover having an accommodating cavity, an opening and a negative pressure dust suction port, and the opening being provided with a dustproof hanging curtain in a circumferential direction; a roller brush being provided in the accommodating cavity and being provided close to the opening, and the roller brush being rotationally coupled to the dust removal cover; and where, in a dust removal state, the opening faces a surface to be dedusted, the roller brush contacts the surface to be dedusted, and an end of the dustproof hanging curtain abuts the surface to be dedusted, a gap between the opening and the surface to be dedusted is blocked by the dustproof hanging curtain so that the accommodating cavity forms a negative pressure cavity.

In the technical solutions of the embodiments of the present application, by providing the dustproof hanging curtain on the dust removal cover and the surface to be dedusted, it may prevent air flowing in the gap between the opening of the dust removal cover and the surface to be dedusted, form a negative pressure cavity between the dust removal cover and the surface to be dedusted, improve an adsorption of the negative pressure device of dust on the surface to be dedusted, and improve a dust removal effect.

In some embodiments, the dust removal device further includes a space plate, the space plate extends from a top portion of the dust removal cover in a vertical direction and encloses a sub negative pressure cavity with the top portion and partial side walls of the dust removal cover, and the negative pressure dust suction port is provided on a first side wall opposite the space plate. By providing the space plate, the negative pressure cavity is further spaced into sub negative pressure cavities, further concentrating a negative pressure attraction of the negative pressure device in the sub negative pressure cavity and improving the dust removal effect.

In some embodiments, the dust removal device further includes a floating dust removal apparatus provided in the accommodating cavity, the floating dust removal apparatus comprises: a scalable assembly coupled to the space plate and provided in a scalable manner in a vertical direction; and a rotary brush coupled to a first end of the scalable assembly facing the opening. The scalable assembly may drive the rotary brush to reciprocate towards the surface to be dedusted, and such a setting may effectively sweep the gaps of various assemblies with different heights of the surfaces to be cleaned, facilitating negative pressure suction cleaning.

In some embodiments, the scalable assembly includes a plurality of connecting rods, an elastic member, and a floating connecting bar, the floating connecting bar is equidistantly coupled to the first side through the plurality of connecting rods provided separately, the elastic member is sleeved on the connecting rod, and both ends of the elastic member are respectively abutted with the space plate and the floating connecting bar. By providing the scalable member, it is possible to maintain an elastic resilience of the scalable assembly and maintain a contractility of the scalable assembly.

In some embodiments, the rotary brush includes a circular brush disc and a plurality of bristles provided on one side of the circular brush disc, a side of the circular brush disc that is deviate from the bristles is rotationally coupled to the floating connecting bar. The circular brush disc may improve a cleaning away range of the rotary brush.

In some embodiments, a side of the opening close to the rotary brush is further provided with a strip dust receiving plate, a first long side of the dust receiving plate is coupled to the dust removal cover, and a second long side of the dust receiving plate opposite the first long side is inclined towards a direction of the rotary brush, and the second long side abuts the surface to be dedusted to block the gap between the opening and the surface to be dedusted. In this way, the dust receiving plate further blocks the gap from the negative pressure cavity, increasing the negative pressure, and the dust receiving plate may accept the dust swept from the rotary brush and roller brush.

In some embodiments, a number of roller brushes is two groups, and the two groups of roller brushes are provided in parallel in the accommodating cavity in a first direction, and the ends of the roller brushes are respectively coupled to a second side wall and a third side wall of the dust removal cover adjacent to the first side wall. By providing two groups of roller brushes, it may effectively replace the dust removal area and the dust removal effect of the dust removal device.

In some embodiments, a number of the space plates is two, and the two space plates are symmetrically provided in the accommodating cavity; and a number of the scalable assembly is correspondingly provided in two groups. By providing two space plates correspondingly, it may form two sub negative pressure cavities, so as to effectively improve the dust removal effect of the dust removal device.

In some embodiments, a side wall of the dust removal cover facing the roller brush is further provided with the negative pressure dust suction port, the negative pressure dust suction port is a strip through groove, and both ends of strip trough extend in the first direction. A direction of the negative pressure dust suction port is provided to be the same as that of the roller brush, which may comprehensively attract the dust swept by the roller brush along an axial direction to avoid a dead corner that cannot be cleaned.

In some embodiments, a first side wall and a fourth side wall of the dust removal cover are further provided with a convex portion extending in a direction away from each other, a length direction of the convex portion extends in the first direction, and the negative pressure dust suction port is provided at the convex portion. By providing the convex portion, the negative pressure dust suction port is protruded out of the side wall, so that it is convenient for the coupling of the negative pressure suction device.

In some embodiments, the dust removal device further includes a mobile apparatus, and the mobile apparatus is coupled to an end of the dust removal cover that is deviate from the opening, and is configured to drive the dust removal cover to reciprocate in the vertical direction. The mobile apparatus may drive the dust removal cover to reciprocate towards the surface to be dedusted, adjust a distance between the dust removal cover and the surface to be dedusted, and ensure negative pressure in the negative pressure cavity.

A second aspect of the present application provides a battery manufacturing apparatus including the dust removal device according to the above embodiments. By providing the above dust removal device, the battery manufacturing apparatus may effectively clean away welding slag and fine powder from the battery surface after welding, so as to improve the efficiency of battery production.

The above description is only a summary of the technical solutions of the embodiments of the present application. In order to understand the technical means of the present application more clearly, it may be implemented in accordance with the content of the specification; and in order to make the above and other objectives, features and characteristics of the embodiments of the present application more obvious and easy to understand, the specific embodiments of the application are cited below.

### BRIEF DESCRIPTION OF DRAWINGS

The features, advantages, and technical effects of the exemplary embodiments of the present application would be described below with reference to the drawings.
FIG. 1 is a schematic structural diagram of a dust removal device provided by some embodiments of the present application;
FIG. 2 is an enlarged schematic diagram of a floating dust removal apparatus shown in FIG. 1 at a circular frame A;
FIG. 3 is a schematic structural diagram of a floating dust removal apparatus provided by some embodiments of the present application; and
FIG. 4 is a schematic structural diagram of a dust removal cover of some embodiments of the present application.

### DETAILED DESCRIPTION OF REFERENCE SIGNS

100. Surface to be dedusted; 200. Dust removal device; 20. Battery module; 30. Dust removal cover; 301. Accommodation cavity; 302. Opening; 303. Dustproof hanging curtain; 304. Negative pressure dust suction port; 305. Space plate; 306. Sub negative pressure cavity; 307. First side wall; 308. Top plate; 309. Second side wall; 310. Third side wall; 311. Fourth side wall; 312. Convex portion; 40. Roller brush; 401. Rotary shaft; 402. Main brush; 50. Floating dust removal apparatus; 501. Connecting rod; 502. Elastic member; 503. Floating connecting bar; 504. Rotary brush; 505. Dust receiving plate; 506. Elastic assembly; 507. First long side; 508. Second long side; and 60. Mobile apparatus.

### DESCRIPTION OF EMBODIMENTS

A detailed description of the technical solutions about the embodiments of the present application will be given below, in combination with the accompanying drawings. The following embodiments are only used to illustrate the technical solutions of the present application more clearly, and are therefore only used as examples, and cannot be used to limit the protection scope of the present application.

Unless otherwise defined, all technological and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusion.

In the description of the embodiments of the present application, the terms "first" and "second" are only intended for a purpose of description, and shall not be understood as an indication or implication of relative importance or implicit indication of the quantity, a specific order or primary-secondary relationship of indicated technical features. In the descriptions in the present application provided, the meaning of "a plurality of' is two or more, unless otherwise explicitly specified.

The phrase "embodiments" referred to herein means that specific features, structures, or characteristics described in conjunction with the embodiments may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the present application, the term "and/or" is only an association relation describing associated objects, which means that there may be three relations. For example, A and/or B may represent three situations: A exists alone, both A and B exist, and B exists alone. In addition, the character "/" in this text generally indicates that the associated objects before and after the character are in an "or" relationship.

In the present application, "a plurality of" means two or more (including two). Similarly, "a plurality of groups" means two or more groups (including two groups), and "a plurality of sheets" means two or more sheets (including two sheets).

In the description of the present application, it should be understood that orientations or positional relationships indicated by terms such as "center", "vertical direction", "horizontal direction", "length", "width", "thickness", "up", "down", "front", "rear", "left", "right", "vertical", "horizontal", "top", "bottom", "inside", "outside", "clockwise", "counterclockwise", "axial direction", "radial direction" and "circumferential direction" are orientations or positional relationships shown based on the drawings, and the terms are merely for convenience of describing the embodiments of the present application and for simplifying the description, but for indicating or implying that an indicated apparatus or element must have a specific orientation, and must be constructed and operated in a specific orientation, which thus may not be understood as limiting the present application.

In the description of the present application, it should be noted that unless otherwise explicitly specified and defined, the terms "mounting", "connecting" and "connection" and "fixing" should be understood in a broad sense, for example, they may be a fixed connection, a detachable connection, or an integrated connection; may be a mechanical connection, or may be an electrical connection; may be a direct connection and may also be an indirect connection via an intermediate medium, or may be communication between the interiors of two elements or the interaction of two elements. For those of ordinary skill in the art, the specific meanings of the above-mentioned terms in the embodiments of the present application may be understood according to specific circumstances.

A battery core of an existing lithium battery module is usually coupled by welding. After welding, a large amount of welding slag and fine powder would be left on a surface of the battery module. These welding slag and fine powder may enter an interior of the battery core and affect the performance thereof. Therefore, it is necessary to thoroughly clean away impurities such as welding slag and fine powder on the surface of the battery module after welding.

The dust removal device in the prior art usually provides a dust suction port above a brush, and then the brushed welding slag and fine powder are sucked away through negative pressure. During the research process, the inventor found that the above device had a problem that the distance between the dust suction port and the open space on a product surface is too large, resulting in severe negative pressure attenuation. Therefore, it is unable to suck welding slag and dust from the surface of the battery module.

Based on the above consideration, in order to improve the negative pressure attraction of the surface to be dedusted, the welding slag and fine powder on the surface of the battery module should be thoroughly cleaned away. The inventor studied and designed a dust removal device 200, including a dust removal cover 30 having an accommodating cavity, and a roller brush 40 is provided in the accommodating cavity 301 to sweep the welding slag and fine powder on the surface of the battery module, thereby disconnecting a connection between the welding slag and dust and the surface of the module; in addition, a circle of dustproof hanging curtain 303 is provided in a circumferential direction at an edge of the opening 302 of the dust removal cover 30 to block the gap between the dust removal cover and the battery module, effectively improving a negative pressure attraction inside the dust removal cover 30, forming a negative pressure space inside the dust removal cover 30, and effectively attracting and cleaning away welding slag and fine powder from the roller brush 40, the surface of the battery module 20, and the air. Good results have been achieved in use, greatly improving the effect of welding slag and dust removal, improving the efficiency of battery production, and improving the product yield.

The dust removal device 200 in the embodiments of the present application may effectively clean away welding slag and dust on a surface of the module generated after welding the surface of the battery module, and improving the product yield and production efficiency.

The embodiments of the present application provide a dust removal device, and a battery produced thereby serves as a power consumption apparatus of power supply, and the power consumption apparatus may be, but is not limited to, mobile phones, tablets, notebook computers, electric toys, electric tools, electromobiles, electric automobiles ships, spacecrafts, and the like. Where the electric toys include fixed or mobile electric toys, such as game consoles, electric vehicle toys, electric ship toys and electric airplane toys; and the spacecrafts include airplanes, rockets, space shuttles, spaceships, and the like.

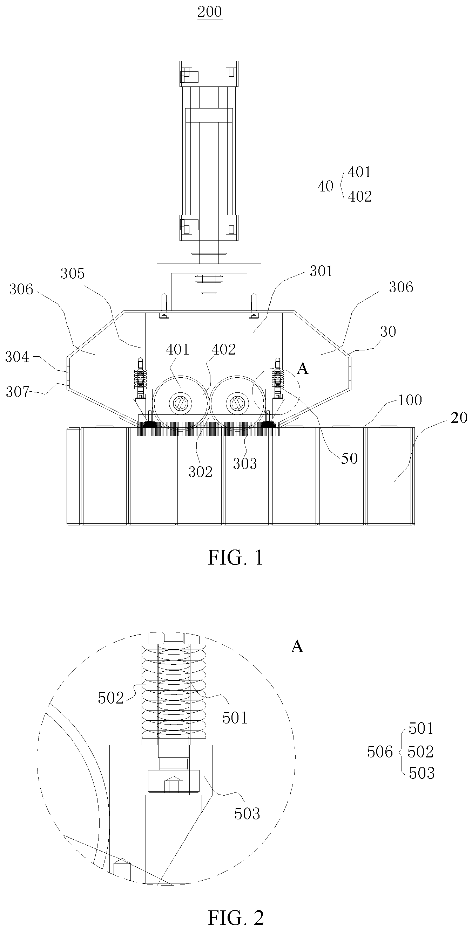

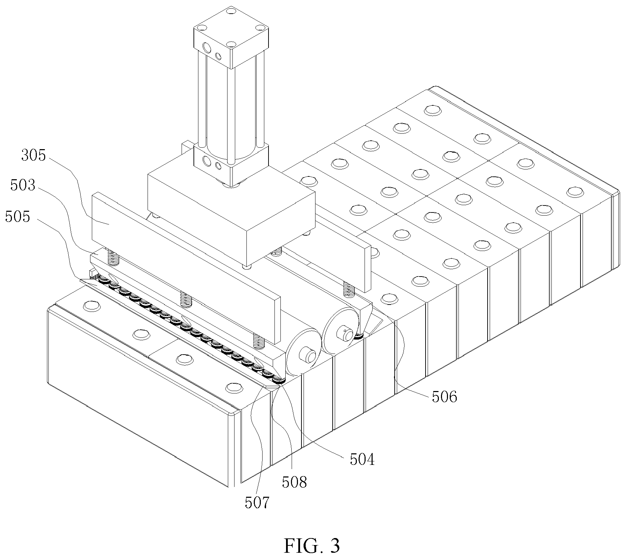

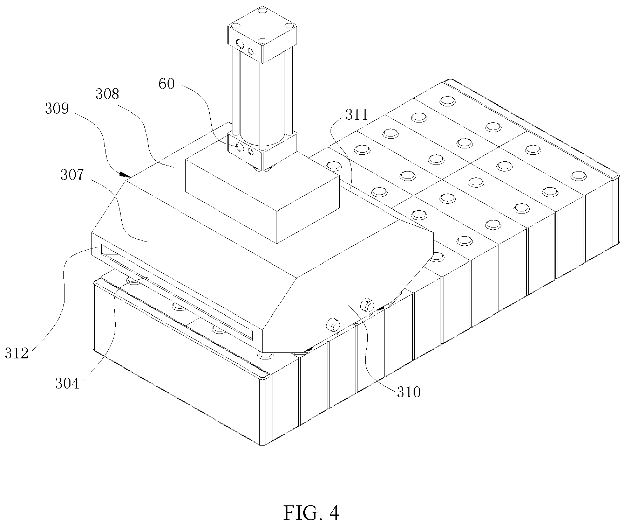

Please refer to FIG. 1 to FIG. 4, FIG. 1 is a schematic structural diagram of a dust removal device provided by some embodiments of the present application; FIG. 2 is an enlarged schematic diagram of a floating dust removal apparatus shown in FIG. 1 at a circular frame A; FIG. 3 is a schematic structural diagram of a floating dust removal apparatus provided by some embodiments of the present application; and FIG. 4 is a schematic structural diagram of the dust removal cover of the embodiments of the present application.

As shown in the figures, the dust removal device 200 in the embodiments of the present application includes a dust removal cover 30 and a roller brush 40. A dust removal cover 30 has an accommodating cavity 301, an opening 302 and a negative pressure dust suction port 304, and the opening 302 being provided with a dustproof hanging curtain 303 in a circumferential direction; a roller brush 40 being provided in the accommodating cavity 301 and being provided close to the opening 302, and the roller brush 40 being rotationally coupled to the dust removal cover 30; and where, in a dust removal state, the opening 302 faces a surface to be dedusted 100, the roller brush 40 contacts the surface to be dedusted 100, and an end of the dustproof hanging curtain 303 abuts the surface to be dedusted 100, a gap between the opening 302 and the surface to be dedusted 100 is blocked by the dustproof hanging curtain 303 so that the accommodating cavity 301 forms a negative pressure cavity.

In the technical solutions of the embodiments of the present application, by providing the dustproof hanging curtain 303 on the dust removal cover 30 and the surface to be dedusted 100, it may prevent air flowing in the gap between the opening 302 of the dust removal cover 30 and the surface to be dedusted 100, form a negative pressure cavity between the dust removal cover 30 and the surface to be dedusted 100, improve an adsorption of the negative pressure device of dust on the surface to be dedusted 100, and improve a dust removal effect.

A dust dustproof device in the embodiments of the present application is configured to clean away welding slag and dust from the surface of the battery module 20. Therefore, the above surface to be dedusted 100 may be a surface of a battery module 20 or the surfaces of other devices that require dust removal, such as a battery cell or a battery core.

Specifically, the dustproof hanging curtain 303 in the embodiment includes a plurality of bristles that are vertically coupled to a circumferential direction of the opening 302 of the dust removal cover 30. Where the density of provided bristles should ensure negative pressure performance in the negative pressure cavity, while allowing a portion of gas to enter the containing cavity 301 from outside to prevent deformation of the dust removal cover 30 due to excessive internal pressure.

In some embodiments, the roller brush 40 includes a rotating shaft 401 with two ends coupled to an inner wall of the dust removal cover 30, and a main brush 402 provided in a circumferential direction around the rotating shaft 401. The main brush 402 is configured to contact the surface to be dedusted 100 to sweep the welding slag and dust on its surface. Moreover, the main brush 402 rubs against the surface to be dedusted, and a surface of the main brush 402 makes interference contact with the surface to be dedusted 100 to ensure a friction force of the surface to be dedusted 100.

According to some embodiments of the present application, the dust removal device further includes a space plate 305, the space plate 305 extends from a top portion of the dust removal cover 30 in a vertical direction and encloses a sub negative pressure cavity 306 with a top portion and partial side walls of the dust removal cover 30, and the negative pressure dust suction port 304 is provided on a first side wall 307 opposite the space plate 305.

In the above embodiments, by providing the space plate 305, a sub negative pressure cavity 306 is spaced from the middle of the negative pressure cavity, and the roller brush 40 is provided outside the sub negative pressure cavity 306 to further reduce a volume of the negative pressure cavity 306, further concentrating a negative pressure attraction of the negative pressure device in the sub negative pressure cavity 306 and improving the dust removal effect.

According to some embodiments of the present application, the dust removal device 200 further includes a floating dust removal apparatus 50 provided in the accommodating cavity 301, the floating dust removal apparatus 50 includes a rotary brush 504 and a scalable assembly 506 coupled to the space plate 305 and provided in a scalable manner in a vertical direction; and a rotary brush 504 coupled to a first end of the scalable assembly 506 facing the opening 302. The scalable assembly 506 may drive the rotary brush 504 to reciprocate towards the surface to be dedusted 100, and such a setting may effectively sweep the gaps of various assemblies with different heights of the surfaces to be cleaned 100, facilitating negative pressure suction cleaning.

According to some embodiments of the present application, as shown in FIG. 2 and FIG. 3, the scalable assembly 506 includes a plurality of connecting rods 501, an elastic member 502, and a floating connecting bar 503, the floating connecting bar 503 is equidistantly coupled to the first side through the plurality of connecting rods 501 provided separately, the elastic member 502 is sleeved on the connecting rod 501, and two ends of the elastic member 502 are respectively abutted with the space plate 305 and the floating connecting bar 503.

In the above structure, the connecting rod 501 and the space plate 305 may be provided in a scalable manner, and one end of the connecting rod 501 extends into the space plate 305 and may slide relative to the space plate 305. The connecting rod 501 may be a bolt, and the plurality of connecting rods 501 may be a plurality of bolts with an equal height. The other end of the connecting rod 501 is fixedly coupled to the floating connecting bar 503. Further, by providing the elastic member 502, it is possible to maintain an elastic resilience of the scalable assembly 506, so that the scalable assembly 506 may reciprocate towards the surface to be dedusted to adapt to the cleaning of different heights.

According to some embodiments of the present application, the rotary brush 504 includes a circular brush disc and a plurality of bristles provided on one side of the brush disc, a side of the circular brush disc that is deviate from the bristles is rotationally coupled to the floating connecting bar 503. The circular brush disc may improve a dust removal range of the rotary brush 504.

According to some embodiments of the present application, a side of the opening 302 close to the rotary brush 504 is further provided with a strip dust receiving plate 505, a first long side 507 of the dust receiving plate 505 is coupled to the dust removal cover 30, and a second long side 508 on the dust receiving plate 505 opposite the first long side 507 is inclined towards a direction of the rotary brush 504, and the second long side 508 abuts the surface to be dedusted 100 to block the gap between the opening 302 and the surface to be dedusted 100. In this way, the dust receiving plate 505 further blocks the gap from the negative pressure cavity 306, increasing the negative pressure, and the dust receiving plate 505 may accept the dust swept from the rotary brush 504 and roller brush 40, bringing the dust closer to the negative pressure suction port 304, and improving the negative pressure dust removal effect.

According to some embodiments of the present application, a number of roller brushes 40 is two groups, and the two groups of roller brushes 40 are provided in parallel in the accommodating cavity 301 in a first direction, and the ends of the roller brushes 40 are respectively coupled to a second side wall 309 and a third side wall 310 of the dust removal cover 30 adjacent to the first side wall 307. By providing two groups of roller brushes 40, it may effectively replace the dust removal area and the dust removal effect of the dust removal device 200.

According to other embodiments of the present application, the two roller brushes 40 are respectively coupled to a drive apparatus that may drive the two roller brushes 40 to rotate relative to the dust removal cover 30. Where the roller brush 40 on the left rotates counterclockwise and the roller brush 40 on the right rotates clockwise. The above settings sweep the impurities on the surface to be dedusted 100 to the side wall of the dust removal cover 30, making the welding slag and dust close to the negative pressure dust suction port 304, improving the efficiency of negative pressure dust removal.

As shown in FIG. 4, the dust removal cover 30 includes a cover body, and the cover body includes a top plate 308 and a first side wall 307, a second side wall 309, a third side wall 310, and a fourth side wall 311 sequentially coupled to and around the top plate 308. The first side wall 307, the second side wall 309, the third side wall 310, the fourth side wall 311, and the top plate 308 enclose to form an accommodating cavity 301, and the accommodating cavity 301 has an opening 302 provided opposite to the top plate 308. The above structure of the dust removal cover 30 may provide an accommodating space for the roller brush 40 and the floating dust removal apparatus 50, while also ensuring the sealing performance inside the accommodating cavity 301.

According to some embodiments of the present application, a number of the space plates 305 is two, and the two space plates 305 are symmetrically provided in the accommodating cavity 301; and a number of the scalable assembly is correspondingly provided in two groups. Two space plates 305 are correspondingly provided to form two symmetrical sub negative pressure cavities 306 in the accommodating cavity 301, which may balance the negative pressure attraction inside the dust removal cover 30, comprehensively clean the welding slag and fine powder inside the dust removal cover 30, and effectively improve the dust removal effect of the dust removal device 200.

According to some embodiments of the present application, a side wall of the dust removal cover 30 facing the roller brush 40 is further provided with the negative pressure dust suction port 304, the negative pressure dust suction port 304 is a strip through groove that runs through the first side wall 307 in a thickness direction, and both ends of the strip groove extend in the first direction. A direction of the negative pressure dust suction port 304 is provided to be the same as that of the roller brush 40, which may comprehensively attract the dust swept by the roller brush 40 along an axial direction to avoid a dead corner that cannot be cleaned.

According to some embodiments of the present application, the first side wall 307 and a fourth side wall 311 of the dust removal cover 30 are further provided with a convex portion 312 extending in a direction away from each other, a length direction of the convex portion 312 extends in the first direction, and the negative pressure dust suction port 304 is provided at the convex portion 312. By providing the convex portion 312, the negative pressure dust suction port 304 is protruded out of the side wall, so that it is convenient for the connection of the negative pressure suction device.

According to some embodiments of the present application, the dust removal device further includes a mobile apparatus, and the mobile apparatus is coupled to an end of the dust removal cover 30 that is deviate from the opening 302, and is configured to drive the dust removal cover 30 to reciprocate in the vertical direction. The mobile apparatus may drive the dust removal cover 30 to reciprocate towards the surface to be dedusted, adjust a distance between the dust removal cover 30 and the surface to be dedusted, and ensure negative pressure in the negative pressure cavity. In some embodiments, the mobile apparatus may further drive the dust removal cover 30 to reciprocate in a horizontal direction, to move the roller brush 40 back and forth on the surface to be dedusted 100 to clean away impurities.

According to other embodiments of the present application, the present application further provides a battery manufacturing apparatus including the dust removal according to the above embodiments. By providing the dust removal device, the battery manufacturing apparatus may effectively clean away welding slag and fine powder from the battery surface after welding, so as to improve the efficiency of battery production.

Finally, it should be noted that the above embodiments are merely used for illustrating rather than limiting the technical solutions of the present application. Although the present application is illustrated in detail with reference to the foregoing embodiments, those of ordinary skill in the art should understand that they can still modify the technical solutions described in the foregoing embodiments, or make equivalent substitutions to some or all of the technical features therein, but these modifications or substitutions can be made to the respective technical solutions without departing from the spirit and scope of the technical solutions of the embodiments of the present application. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A dust removal device, comprising:
a dust removal cover having an accommodating cavity, an opening and a negative pressure dust suction port, and the opening being provided with a dustproof hanging curtain in a circumferential direction;
a roller brush being provided in the accommodating cavity and being provided close to the opening, and the roller brush being rotationally coupled to the dust removal cover; and
wherein, in a dust removal state, the opening faces a surface to be dedusted, the roller brush contacts the surface to be dedusted, and an end of the dustproof hanging curtain abuts the surface to be dedusted, a gap between the opening and the surface to be dedusted is blocked by the dustproof hanging curtain so that the accommodating cavity forms a negative pressure cavity.

2. The dust removal device according to claim 1, wherein the dust removal device further comprises a space plate, the space plate extends from a top portion of the dust removal cover in a vertical direction and encloses a sub negative pressure cavity with the top portion and partial side walls of the dust removal cover, and the negative pressure dust suction port is provided on a first side wall opposite the space plate.

3. The dust removal device according to claim 2, wherein the dust removal device further comprises a floating dust removal apparatus provided in the accommodating cavity, the floating dust removal apparatus comprises: a scalable assembly coupled to the space plate and provided in a scalable manner in a vertical direction; and a rotary brush coupled to a first end of the scalable assembly facing the opening.

4. The dust removal device according to claim 3, wherein the scalable assembly comprises a plurality of connecting rods, an elastic member, and a floating connecting bar, the floating connecting bar is equidistantly coupled to the first side through the plurality of connecting rods provided separately, the elastic member is sleeved on the connecting rods, and both ends of the elastic member are respectively abutted with the space plate and the floating connecting bar.

5. The dust removal device according to claim 3 or 4, wherein the rotary brush comprises a circular brush disc and a plurality of bristles provided on one side of the circular brush disc, a side of the circular brush disc that is deviate from the bristles is rotationally coupled to the floating connecting bar.

6. The dust removal device according to any one of claims 3-5, wherein a side of the opening close to the rotary brush is further provided with a strip dust receiving plate, a first long side of the dust receiving plate is coupled to the dust removal cover, and a second long side of the dust receiving plate opposite the first long side is inclined towards a direction of the rotary brush, and the second long side abuts the surface to be dedusted to block the gap between the opening and the surface to be dedusted.

7. The dust removal device according to any one of claims 3-6, wherein a number of roller brushes is two groups, and the two groups of roller brushes are provided in parallel in the accommodating cavity in a first direction, and the ends of the roller brushes are respectively coupled to a second side wall and a third side wall of the dust removal cover adjacent to the first side wall.

8. The dust removal device according to any one of claims 3-7, wherein a number of the space plates is two, and the two space plates are symmetrically provided in the accommodating cavity; and a number of the scalable assembly is correspondingly provided in two groups.

9. The dust removal device according to claim 7, wherein a side wall of the dust removal cover facing the roller brush is further provided with the negative pressure dust suction port, the negative pressure dust suction port is a strip through groove, and both ends of the strip groove extend in the first direction.

10. The dust removal device according to claim 7 or 9, wherein the first side wall and a fourth side wall of the dust removal cover are further provided with a convex portion extending in a direction away from each other, a length direction of the convex portion extends in the first direction, and the negative pressure dust suction port is provided at the convex portion.

11. The dust removal device according to any one of claims 1-10, wherein the dust removal device further comprises a mobile apparatus, and the mobile apparatus is coupled to an end of the dust removal cover that is deviate from the opening, and is configured to drive the dust removal cover to reciprocate in the vertical direction.

12. A battery manufacturing apparatus, comprising the dust removal device according to any one of claims 1 to 11.
